# EUROPEAN PATENT APPLICATION

(11) **EP 1 658 957 A1**
(43) Date of publication of application: **24.05.2006**
(21) Application number: 05024367.4
(22) Date of filing: 09.11.2005
(51) Int. Cl.: B29C 67/24, C08J 3/22, F16J 15/14

(54) **Liquid rubber article in situ compounding into a forming mold**

(30) Priority: 23.11.2004 US 996629
(71) Applicant: Carl Freudenberg KG, 69469 Weinheim (DE)
(72) Inventor: Hochgesang, Paul J., Ann Arbor, Michigan 48103 (US)

(57) **Abstract**

A method for making cured polymeric articles such as gaskets or seals *in situ* (within a forming mold) from a feed stream compounded polymer admixture of (a) a first batch admixture of base polymer and a first curing component of a plural component curing combination, (b) a second batch admixture of the base polymer and a second curing component, and (c) a third batch admixture of a carrier and a plurality of performance additives. The third batch admixture is provided from a vessel having a relatively small volume (when compared to the volume of the vessels holding the first and second batch admixtures); this small volume enables precise formulations of additives and rapid changeover of additive formulations for the base polymer.

## Description

This invention relates to compounding of polymeric formulations that initiate curing promptly after compounding. In particular, the present invention relates to rubber and elastomer formulations used for gaskets and seals.

Gaskets provide a seal between two mating components. Typically, the two components have respective (essentially coplanar or flat) mating surfaces essentially adjacently disposed except for the intervening gasket. In this regard and in the absence of the gasket, the mating surfaces frequently do not press together ideally without some voids being created between the two surfaces, and these voids can establish undesired leakage pathways between the two components. The gasket compensates for this by providing a reasonably flexible interface to fill any voids between the surfaces and also, in many cases, to provide a compressed mechanical spring between the two mating surfaces. Bolts or similar fasteners compressively connect (mate) the two components together and compress the gasket (to form a compressed spring seal) between the mating surfaces.

One traditional method for making gaskets is to compound a polymer formulation, promptly inject the formulation into a mold, and cure the formulation *in situ* within the mold into a cured gasket. In this regard, the formulation usually initiates curing promptly after compounding. In more detail, such a procedure usually involves (a) preparation (as a batch) of a first blend of a base liquid rubber with one component of a two component curing catalyst, (b) preparation (again as a batch) of a second blend of the base liquid rubber with the second component of the two component curing catalyst, (c) in-line (baffled plug flow) mixing of the two blends into the polymer formulation, (d) prompt injection of the formulation into a mold, and (e) *in situ* curing of the formulation in the mold to make the gasket.

In some instances, a third blend of a pigment is also formulated and mixed into the formulation just prior to injection into the mold. In this regard (especially when different pigments are used from in different gaskets made from the same first and second blends over time) it is desirable to blend pigmented additives into a separate (and relatively small) third batch rather than into the (relatively large) batches of either the first or second blends. In this way, residual pigment does not contaminate the vessels used for mixing the first blend and the second blend, and product consistency from batch to batch is also predictable.

The first, second, and third blends are usually mixed together under volumetric proportioning enabled by positive displacement pumps. The pumps are frequently under control of a unified computer-implemented control program that coordinates overall operation of the entire mixing and molding system making the gasket.

Although a single item such as a pigment has been added as a third blended stream of pigment and base polymer, complexed additives (such as heat stabilizer and fire retardant combinations) for the gasket have traditionally been added into either the first or second blends. In this regard, process considerations respective to dilution, operating technician convenience, productivity (relatively minor to gasket to gasket variation respective to general additive requirements), and quality (minor contamination of a heat additive from a prior batch usually has had essentially no quality impact on a subsequent batch as compared to the situation with pigment contamination) usually have indicated such blending into one of the two primary blends as the most cost effective approach.

This traditional manufacturing approach, however, does not effectively meet the comprehensive set of emerging requirements in gasket manufacture. In this regard, gasket formulations are now specifically designed to meet particular gasket application environments, and formulations for such designed gaskets require precision in their component proportioning. Economic forces such as "just in time" manufacture and delivery also obsolesce an approach as described above where a large inventory of gaskets from a large batch of first and second blends could be made and held for subsequent shipping.

An approach to gasket manufacture is needed which will minimize manufacturing cost, enable rapid reconfiguration of a gasket processing line to make small lots of differentiated gaskets with application-specific formulations, provide precision in formulations used for gaskets, and provide diversity in formulations used for gaskets and seals. These and other needs are achieved with the present invention.

### SUMMARY

The invention provides a method for making at least one cured polymeric article, of:
(a) admixing a first batch admixture of base polymer and a first curing component of a plural component curing combination;
(b) admixing a second batch admixture of the base polymer and a second curing component of the curing combination;
(c) admixing a third batch admixture of a carrier and a plurality of performance additives for the polymeric article, the performance additives including at least two performance additives selected from the group consisting of a heat stabilizer, an acid absorber, a crosslinking inhibitor, a pigment, a flame retardant, a solvent repellant, a crosslinking enhancer, a crosslinking activator, a filler, a plasticizer, an antidegradant, and a bonding agent;
(d) flow admixing the first, second, and third batch admixtures into a feed stream;
(e) forming the feed stream to provide shaped compounded polymer for the polymeric article; and
(f) curing the shaped compounded polymer into the polymeric article.

In a further aspect of the invention, the carrier is the base polymer.

In yet a further aspect of the invention, the first admixing, second admixing, third admixing, and (plug-flow) flow admixing are controlled through computer-implemented unified control according to a control program. In one form, the admixing of the third admixture, plug-flow admixing, forming, and curing further comprise configuring the control program with a set of control settings specific for making the polymeric article with the third batch admixture.

In another aspect, the third batch admixture is admixed in a quantity according to a predefined desired plurality of the cured polymeric articles.

In yet another aspect, a composition is provided for admixing with a first batch admixture of base polymer and a first curing component of a plural component curing combination and with a second batch admixture of the base polymer and a second curing component of the curing combination, where the composition and the first batch admixture and the second batch admixture all admix together to provide a feed stream of compounded polymer, comprising:
(a) a carrier quantity of the base polymer; and
(b) a plurality of performance additives independently selected from the group consisting of a heat stabilizer, an acid absorber, a crosslinking inhibitor, a pigment, a flame retardant, a solvent repellant, a crosslinking enhancer, a crosslinking activator, a filler, a plasticizer, an antidegradant, and a bonding agent; where the carrier quantity provides less than about 10 percent of the base polymer in the compounded polymer of the feed stream, and where the base polymer is selected from the group consisting of liquid silicone, liquid fluoroelastomer, liquid nitrile rubber, liquid ethylene-propylene-diene polymer, liquid acrylic polymer, liquid hydrogenated nitrile butyl rubber, or a combination of these.
   The invention essentially saves a step in cleaning and / or compounding for either or both of the first and/or second batch vessels. It also enables the use of additives that could be negatively affected by long-term contact (prior to curing) with either of the catalytic components. Waste is also minimized over time as the gasket/seal manufacturing system is used to make differentiated products. Essentially new compounding is achieved by changing only the third pot or blend in the system.
   Further areas of applicability will become apparent from the detailed description provided hereinafter. It should be understood that the detailed description and specific examples, while indicating embodiments of the invention, are intended for purposes of illustration only and are not intended to limit the scope of the invention.

### BRIEF DESCRIPTION OF THE DRAWING

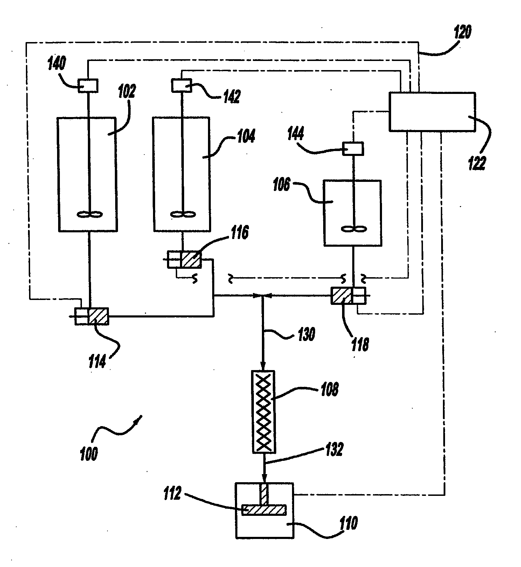

The present invention will become more fully understood from the detailed description and the accompanying drawing of FIG. 1 and its depiction of a manufacturing system for making gaskets.

It should be noted that the figure set forth herein is intended to exemplify the general characteristics of an apparatus, materials, and methods among those of this invention, for the purpose of the description of such embodiments herein. This figure may not precisely reflect the characteristics of any given embodiment, and is not necessarily intended to define or limit specific embodiments within the scope of this invention.

### DESCRIPTION

The following definitions and non-limiting guidelines must be considered in reviewing the description of this invention set forth herein.

The headings (such as "Introduction" and "Summary") used herein are intended only for general organization of topics within the disclosure of the invention, and are not intended to limit the disclosure of the invention or any aspect thereof. In particular, subject matter disclosed in the "Introduction" may include aspects of technology within the scope of the invention, and may not constitute a recitation of prior art. Subject matter disclosed in the "Summary" is not an exhaustive or complete disclosure of the entire scope of the invention or any embodiments thereof.

The citation of references herein does not constitute an admission that those references are prior art or have any relevance to the patentability of the invention disclosed herein. All references cited in the Description section of this specification are hereby incorporated by reference in their entirety.

The description and specific examples, while indicating embodiments of the invention, are intended for purposes of illustration only and are not intended to limit the scope of the invention. Moreover, recitation of multiple embodiments having stated features is not intended to exclude other embodiments having additional features, or other embodiments incorporating different combinations the stated of features.

As used herein, the words "preferred" and "preferably" refer to embodiments of the invention that afford certain benefits, under certain circumstances. However, other embodiments may also be preferred, under the same or other circumstances. Furthermore, the recitation of one or more preferred embodiments does not imply that other embodiments are not useful, and is not intended to exclude other embodiments from the scope of the invention.

As used herein, the word 'include," and its variants, is intended to be non-limiting, such that recitation of items in a list is not to the exclusion of other like items that may also be useful in the materials, compositions, devices, and methods of this invention.

In use, a gasket represents an intersection of considerations in both mechanical design and in materials design. In this regard, improvements in materials frequently are intertwined with improvements in mechanical design. The embodiments describe an approach to gasket manufacture which enables improvements in material design to be fully exploited by enabling rapid reconfiguration of a gasket processing line to make small lots of differentiated gaskets with application-specific formulations, provide precision in formulations used for gaskets, and provide diversity in formulations used for gaskets and seals.

Referring initially to Figure 1, a manufacturing system 100 for making gaskets is presented. As should be apparent to those of skill, system 100 could also be used for making any polymeric article, such as (for example and without limitation) a seal, packing, an appliance housing, or a cup.

Vessel 104 contains the base polymer admixed with a first curing component of a two-component curing combination. Vessel 104 contains the base polymer admixed with the second curing component of the two-component curing combination.

Vessel 106 contains the base polymer admixed with a plurality of performance additives for the polymeric article of interest. These performance additives include at least two of the following additive types: a heat stabilizer, an acid absorber, a crosslinking inhibitor, a stabilizer, a pigment, a flame retardant, a solvent repellant, a crosslinking enhancer, a crosslinking activator, a filler (a material contributing to the performance properties of the resultant compounded polymer of the polymeric article respective to such properties as, without limitation, bulk, weight, and/or viscosity while being essentially chemically inert or essentially reactively insignificant respective to chemical reactions within the compounded polymer), a plasticizer, an antidegradant, and/or a bonding agent.

Positive displacement pump 114 forwards the admixture from vessel 102 to the intake of in-line mixer 108. Positive displacement pump 116 forwards the admixture from vessel 104 to the intake of in-line mixer 108. Positive displacement pump 118 forwards the admixture from vessel 106 to the intake of in-line mixer 108.

The admixture in vessel 102 is agitated with impeller mixer 140, the admixture in vessel 104 is agitated with impeller mixer 142, and the admixture in vessel 106 is agitated with impeller mixer 144.

Mixer 108 is a baffled static mixer with baffles positioned to admix stream 130 into feed stream 132 (compounded polymer in feed stream 132) for injection mold 110 as stream 130 flows from pumps 114, 116, and 118 into mixer 108 and then as fully admixed feed stream 132 (compounded polymer in feed stream 132) into mold 110.

Mold 110 provides a cavity for forming the compounded polymer of feed stream 132 into shaped compounded polymer 112. Shaped compounded polymer 112 is cured *in situ* within mold 110 to provide the desired article.

Control module 122 effects property measurement and control of mixer 140, mixer 142, mixer 144, mold 110, pump 114, pump 116, and pump 118 through use of measurement signal lines and control signal lines such as signal line 120. Control module 122 executes a control program (not shown, but which should be apparent) in accordance with a set of control settings specific for making the desired article (such as a gasket).

As graphically depicted in FIG. 1, vessel 106 is preferably of substantially less volume than the volume of either of vessels 102 and 104. In this regard, the admixture contents of vessel 106 provide specialized performance additives for a particular (for example, first) type of cured polymeric article. When another (for example, second) type of cured polymeric article of the same base polymer and catalyst of the first type of article is desired, the only vessel that needs to be reformulated (or -- in an alternative embodiment where a more substantive change in the type of article to be made is desired -- cleaned and recharged) is vessel 106. Further in this regard, the shift in type of article might require both a change in performance additive formulation and a change of mold 110 to provide an alternative cavity design.

By using vessel 106 for the admixture providing the performance additive "package" for feed stream 132, feed stream 132 formulations are specifically designed to provide gaskets that readily meet particular gasket application environments. Insofar as vessel 106 is relatively small (on the order of from about 1 gallon to about 5 gallons in capacity when compared to vessel capacities of vessels 102 and 104 that range, in alternative embodiments, from about 10 gallons to about 1000 gallons), cleaning of vessel 106 is achieved rapidly and with a relatively small amount of cleaning material. This speeds the process of converting between desired performance additive packages for feed stream 132 when compared to the prior art approach of formulating additives into either vessel 102 and / or vessel 104. The relatively small size of vessel 106 also facilitates fully random distribution of each component of the admixture of vessel 106 during admixing since full mixing efficacy (circulation and fluid shear conformant to fully random dynamic distribution of each component of the admixture into the admixture during admixing) through use of mixer 144 is readily achievable at low power and component cost in a vessel of the size of vessel 106. Precision in performance additive proportioning within the admixture of vessel 106 is also readily enabled by the size of vessel 106 insofar as an individual batch composition is readily adjusted with a small addition of a particular additive, and / or a quantity of vessel 106 admixture is precisely prepared according to a predefined desired quantity of cured polymeric articles. As should be apparent, waste of admixture residuals from vessel 106 during cleaning is also comparably minimized. The small size of vessel 106 in system 100 also enables the use of performance additives that are negatively affected by long-term contact (prior to curing) with either of the catalytic components of vessel 102 or 104. Finally, the high mixing intensity environment readily provided with relatively low power input to mixer 144 in the context of the relatively small size of vessel 106 enables performance additives to be sustained in either emulsion admixture or suspension admixture if solution admixture is not conveniently achievable.

The relatively small size of vessel 106 also provides a system 100 that meets "just in time" manufacture and delivery requirements for making small lots of differentiated gaskets with application-specific formulations. The invention essentially avoids a step of cleaning and/or compounding for either or both of vessels 102 and 104 when a plurality of performance additive formulations need to be handled over time. Indeed, a plurality of vessel 102 and 104 pairs in one embodiment provide differentiated base polymer and catalyst combinations for feed stream 132 with rapid changeover in operation being augmented by use of vessel 106 to provide an appropriate additive package.
In operation, as previously described, control module 122 effects property measurement and control of mixer 140, mixer 142, mold 110, pump 114, pump 116, and pump 118 according to a set of control program settings specific for making a desired article (such as a gasket). In this regard, the control program in one embodiment is configured with set of control settings specific for making a particular gasket; this set of control settings is changed in one embodiment with each change of the formulation of admixture in vessel 106 so that appropriate operating conditions are provided for each specific type (per each admixture formulation within vessel 106) of gasket made by system 100.

In system 100, flow admixing uses a baffled line mixer 108 (also denoted herein as a plug-flow mixer, a static mixer, an static in-line mixer, or an in-line mixer). In an alternative embodiment, mixer 108 is a twin-screw mixer. In the context of the equipment capabilities, admixtures from vessels 102, 104, and 106 are designed to preferably independently have a kinematic viscosity of from about 20,000 centistokes to about 5,000,000 centistokes. In some embodiments, mold 110 is heated, cooled, or heated and then cooled by control module 100 in forming an article from shaped compounded polymer 122. Mold 110 achieves forming of feed steam 132 into shaped compounded polymer 112. In alternative embodiments, mold 110 provides a forming operation according to any of compression molding, injection molding, blow molding, casting, laminating, extruding, or calandaring. In alternative embodiments, the manufactured polymer article is any of a cure-in-place gasket (CIPG), an inject-in-place gasket (IJPG), a press-in-place gasket (PIPG), and a form-in-place gasket (FIPG).

Turning now to the compositions of the vessel admixtures, the base polymer for vessels 102 and 104 is, in alternative embodiments, any of liquid silicone, liquid fluoroelastomer, liquid nitrile rubber, liquid ethylene-propylene-diene polymer, liquid acrylic polymer, liquid hydrogenated nitrile butyl rubber, or combinations of these. The curing catalyst combinations for vessels 102 and 104 include a curing agent for one of these vessels and a companion catalyst such as platinum in the other vessel.

Turning to the admixture of vessel 106, the base polymer or other carrier is admixed with a plurality of performance additives for the polymeric article that will be made. These performance additives include at least two types of the following: a heat stabilizer, an acid absorber, a crosslinking inhibitor, a stabilizer, a pigment, a flame retardant, a solvent repellant, a crosslinking enhancer, a crosslinking activator, a filler, a plasticizer, an antidegradant, and/or a bonding agent.

In alternative embodiments of vessel 106 in operation, the heat stabilizer (or radical scavenger) is any of an iron oxide, manganese oxide, cerium hydrate, or a mixture of these. In alternative embodiments, the acid absorber is any of titanium dioxide, magnesium oxide, calcium oxide, zinc oxide, calcium hydroxide, or a mixture of these. In one silicone embodiment, the crosslinking inhibitor is cyclohexanol. In alternative embodiments, the filler is any of silica fume (fumed silica), silica precipitate (precipitated silica), carbon black, kaolin, microspheres, or a combination of these. The carrier for vessel 106 is the base polymer (of vessels 102 and 104) in one embodiment; in an alternative embodiment, the carrier for vessel 106 is any material that effectively admixes the performance additives so that they will further appropriately admix with the vessel 102 and 104 admixtures in mixer 108 to provide feed stream 132. Preferably, the quantity of carrier in vessel 106 provides less than about 10 percent of the base polymer in the compounded polymer of feed stream 132.

Table 1 depicts further detail in specific related materials for alternative admixture embodiments in operation of vessels 102, 104, and 106.

**Table 1 (for quoted letter and abbreviated identifiers, see listing below table)**

| Vessel 102 /104 base polymer | Liquid silicone | Liquid fluoro- elastomer | Liquid nitrile rubber | Ethylene- propylen e-diene polymer | Acrylic polymer | Liquid hydrogenat ed nitrile butyl rubber |
|---|---|---|---|---|---|---|
| Vessel 102 curing component (crosslinking initiator) | Pt; DBPH; DiCup | DBPH; DiCup; BTPPAF /BPAF | Sulfur; DBPH; DiCup | Sulfur; DBPH; DiCup | Sulfur; DBPH; DiCup; Quatentar y Ammoniu m Salts | 4,4-bis(tetrabut yl-peroxyl) butyl valerate; DBPH; DiCup |
| Vessel 104 curing component (co-curing agent) | Hydro- gen siloxon es | TAIC; TMAIC; Hexa- methyle ne diamine carbama te | TMTD; MBTS; DPTH; SR517; SR351; TMPTM A | TMTD; MBTS; DPTH; SR517; SR351; TMPTMA | Na; K; stearates; m-phenyl- enedimale -imide; DOTG | SR517; SR351; TMPTMA; Liquid PBD |
| Vessel 106 carrier (plasticizer) | Silico ne | FKM | NBR | EPDM | ACM | HNBR |
| Vesse1106 heat stabilizer | Iron Oxid e; Man-gane se Oxid e; Ceriu m Hydr ate | N.A. | N.A. | N.A. | N.A. | N.A. |
| Vessel 106 acid absorber | MgO ; TiO₂; CaO; ZnO | MgO; Ca(O H)₂; ZnO | ZnO | ZnO, MgO | N.A. | MgO; ZnO |
| Vessel 106 crosslinking inhibitor | Cycl o-hexanol | N.A. | N.A. | N.A. | N.A. | N.A. |
| Vessel 106 pigment | Inorganic and orga nic colors | Inorganic and organi c colors | Inorganic and organi c colors | Inorganic and organic colors | Inorganic and organic colors | Inorganic and organic colors |
| Vessel 106 flame retardant | Pt; Borat es | N.A. | N.A. | N.A. | N.A. | N.A. |
| Vessel 106 processing aid/ release agent | Stearic acid | Carnauba wax; Organ o- silicon e comp ounds | Esters; Aflux 54 | q- octade ce- namide; Oleam ide | Stearic acid; Free- acid organic phosphate ester; Wax | Aliphatic fatty acid esters; Stearic acid; Aflux 54 |
| Vessel 106 filler | "A" | "A" | "A" | "A" | "A" | "A" |
| Vessel 106 plasticizer | Low mole cular weig ht silox anes | Low molec ular weigh t FKM | TOT M; DOP; DOS | Parafi nic Oil | Ether/E ster types | TOTM; DOP; DOS |
| Vessel 106 antidegrad ant | N.A. | N.A. | 4,4- bis(α- dimet hyl- benzy l)- diphe nyl- amine (in exam pie) | 4,4- bis(α- dimeth yl- benzyl )- diphen yl- amine (in examp le) | 4,4- bis(α- dimethy l- benzyl)- dipheny l-amine (in exampl e) | 4,4-bis(α-dimethyl-benzyl)-diphenyl-amine (in example ) |
| Vessel 106 bonding agent | Silan es | Silane s | Silane s | Silane s | Silanes | Silanes |

In the above table:
"A" is any of any of silica fume, silica precipitate, carbon black, kaolin, microspheres, or a combination of these;
ACM is acrylic acid ester rubber / polyacrylate rubber;
Aflux 54 is pentaerythrityltetrastearate;
BTPPAF/BPAF is benzyltriphenylphosphonium bisphenol AF salt/ Bisphenol AF;
DBPH is 2,5-dimethyl-2,5-di(t-butylperoxy)hexane;
DiCup is dicumyl peroxide;
DOP is dioctyl phthalate;
DOS is dioctyl sebacate;
DOTG is di-ortho-tolylguanidine;
DPTH is dipentamethylenethiuram hexasulfide;
EPDM is ethylene-propylene diene rubber;
FKM is fluoroelastomer;
HNBR is hydrogenated nitrile rubber;
K is potassium;
MBTS is 2,2'-dibenzothiazyl disulfide;
Na is sodium;
NBR is nitrile rubber;
PBD is polybutadiene;
SR351 is trimethylolpropane triacrylate (Sartomer Corp. of Exton, Pa.);
SR517 is a trifunctional crosslinking agent available from Sartomer Corp. of Exton, Pa.;
TAIC is triallylisocyanurate;
TMAIC is trimethallylisocyanurate;
TMPTMA is trimethylolpropane trimethyacrylate;
TMTD is tetramethyl thiuram disulfide; and
TOTM is trioctyl trimellitate.

The examples and other embodiments described herein are exemplary and not intended to be limiting in describing the full scope of compositions and methods of this invention. Equivalent changes, modifications and variations of specific embodiments, materials, compositions and methods may be made within the scope of the present invention, with substantially similar results.

## Claims

1. A method for making at least one cured polymeric article, comprising:
(a) admixing a first batch admixture of base polymer and a first curing component of a plural component curing combination;
(b) admixing a second batch admixture of said base polymer and a second curing component of said curing combination;
(c) admixing a third batch admixture of a carrier and a plurality of performance additives for said polymeric article, said performance additives including at least two performance additives selected from the group consisting of a heat stabilizer, an acid absorber, a crosslinking inhibitor, a pigment, a flame retardant, a solvent repellant, a crosslinking enhancer, a crosslinking activator, a filler, a plasticizer, an antidegradant, and a bonding agent;
(d) flow admixing said first, second, and third batch admixtures into a feed stream;
(e) forming said feed stream to provide shaped compounded polymer for said polymeric article; and
(f) curing said shaped compounded polymer into said polymeric article.

2. A method according to Claim 1 wherein said carrier is said base polymer.

3. A method according to Claim 1 wherein said first admixing, second admixing, third admixing, and plug-flow admixing are controlled through computer-implemented unified control according to a control program; and wherein said admixing of said third admixture, plug-flow admixing, forming, and curing further comprise configuring said control program with a set of control settings specific for making said polymeric article with said third batch admixture.

4. A method according to Claim 1 wherein said admixing of said third batch admixture admixes a quantity of third batch admixture according to a predefined desired plurality of said cured polymeric articles.

5. A method according to Claim 1 wherein said flow admixing uses a baffled line mixer.

6. A method according to Claim 1 wherein said first admixture, said second admixture, said third admixture, and said feed stream independently have a kinematic viscosity of from about 20,000 centistokes to about 5,000,000 centistokes.

7. A method according to Claim 1 wherein said flow admixing uses a twin screw mixer.

8. A method according to Claim 1 wherein said polymeric article is selected from the group of polymeric articles of a gasket and a seal.

9. A method according to Claim 1 wherein said base polymer is selected from the group consisting of liquid silicone, liquid fluoroelastomer, liquid nitrile rubber, liquid ethylene-propylene-diene polymer, liquid acrylic polymer, liquid hydrogenated nitrile butyl rubber, and combinations thereof.

10. A method according to Claim 1 wherein said first curing component consists of platinum.

11. A method according to Claim 1 wherein said second curing component is a crosslinking agent.

12. A method according to Claim 1 wherein said heat stabilizer is selected from the group consisting of an iron oxide, manganese oxide, cerium hydrate, and combinations thereof.

13. A method according to Claim 1 wherein said acid absorber is selected from the group consisting of titanium dioxide, magnesium oxide, calcium oxide, zinc oxide, calcium hydroxide, and combinations thereof.

14. A method according to Claim 1 wherein said crosslinking inhibitor consists of cyclohexanol.

15. A method according to Claim 1 wherein said filler is selected from the group consisting of silica fume, silica precipitate, carbon black, kaolin, microspheres, and combinations thereof.

16. A method according to Claim 1 wherein said solvent repellant consists of particulate polytetrafluoroethylene.

17. A method according to Claim 1 wherein said forming comprises a process selected from the group consisting of compression molding, injection molding, blow molding, casting, laminating, extruding, and calandaring.

18. A method according to Claim 1 wherein said polymer article is a gasket selected from the group consisting of a cure-in-place gasket (CIPG), an inject-in-place gasket (IJPG), a press-in-place gasket (PIPG), and a form-in-place gasket (FIPG).

19. A method according to Claim 1 wherein said curing further comprises heating said compounded polymer.

20. A polymeric article made by a process, comprising:
(a) admixing a first batch admixture of base polymer and a first curing component of a plural component curing combination;
(b) admixing a second batch admixture of said base polymer and a second curing component of said curing combination;
(c) admixing a third batch admixture of a carrier and a plurality of performance additives for said polymeric article, said performance additives including at least two performance additives selected from the group consisting of a heat stabilizer, an acid absorber, a crosslinking inhibitor, a pigment, a flame retardant, a solvent repellant, a crosslinking enhancer, a crosslinking activator, a filler, a plasticizer, an antidegradant, and a bonding agent;
(d) flow admixing said first, second, and third batch admixtures into a feed stream;
(e) forming said feed stream to provide shaped compounded polymer for said polymeric article; and
(f) curing said shaped compounded polymer into said polymeric article.

21. A polymeric article according to Claim 20 wherein said carrier is said base polymer.

22. A polymeric article according to Claim 20 wherein said first admixing, second admixing, third admixing, and plug-flow admixing are controlled through computer-implemented unified control according to a control program; and wherein said admixing of said third admixture, plug-flow admixing, forming, and curing further comprise configuring said control program with a set of control settings specific for making said polymeric article with said third batch admixture.

23. A polymeric article according to Claim 20 wherein a plurality of said polymeric articles are desired and said admixing of said third batch admixture admixes a quantity of third batch admixture according to a predefined desired plurality of said polymeric articles.

24. A polymeric article according to Claim 20 wherein said flow admixing uses a baffled line mixer.

25. A polymeric article according to Claim 20 wherein said first admixture, said second admixture, said third admixture, and said feed stream independently have a kinematic viscosity of from about 20,000 centistokes to about 5,000,000 centistokes.

26. A polymeric article according to Claim 20 wherein said flow admixing uses a twin screw mixer.

27. A polymeric article according to Claim 20 wherein said polymeric article is selected from the group of polymeric articles of a gasket and a seal.

28. A polymeric article according to Claim 20 wherein said base polymer is selected from the group consisting of liquid silicone, liquid fluoroelastomer, liquid nitrile rubber, liquid ethylene-propylene-diene polymer, liquid acrylic polymer, liquid hydrogenated nitrile butyl rubber, and combinations thereof.

29. A polymeric article according to Claim 20 wherein said first curing component consists of platinum.

30. A polymeric article according to Claim 20 wherein said second curing component is a crosslinking agent.

31. A polymeric article according to Claim 20 wherein said heat stabilizer is selected from the group consisting of an iron oxide, manganese oxide, cerium hydrate, and combinations thereof.

32. A polymeric article according to Claim 20 wherein said acid absorber is selected from the group consisting of titanium dioxide, magnesium oxide, calcium oxide, zinc oxide, calcium hydroxide, and combinations thereof.

33. A polymeric article according to Claim 20 wherein said crosslinking inhibitor consists of cyclohexanol.

34. A polymeric article according to Claim 20 wherein said filler is selected from the group consisting of silica fume, silica precipitate, carbon black, kaolin, microspheres, and combinations thereof.

35. A polymeric article according to Claim 20 wherein said forming comprises a process selected from the group consisting of compression molding, injection molding, blow molding, casting, laminating, extruding, and calandaring.

36. A polymeric article according to Claim 20 wherein said polymer article is a gasket selected from the group consisting of a cure-in-place gasket (CIPG), an inject-in-place gasket (IJPG), a press-in-place gasket (PIPG), and a form-in-place gasket (FIPG).

37. A polymeric article according to Claim 20 wherein said curing further comprises heating said compounded polymer.

38. A method for making two types of cured polymeric articles, comprising:
(a) admixing a first batch admixture of base polymer and a first curing component of a plural component curing combination;
(b) admixing a second batch admixture of said base polymer and a second curing component of said curing combination;
(c) admixing a first type of third batch admixture of a carrier and a plurality of performance additives for a first type of said polymeric articles, said first type of third batch admixture in a quantity according to a predefined desired plurality of said first type of cured polymeric articles, said performance additives including at least one performance additive selected from the group consisting of a heat stabilizer, an acid absorber, a crosslinking inhibitor, a pigment, a flame retardant, a solvent repellant, a crosslinking enhancer, a crosslinking activator, a filler, a plasticizer, an antidegradant, and a bonding agent;
(d) admixing a second type of third batch admixture of a carrier and a plurality of performance additives for a first type of said polymeric articles, said second type of third batch admixture in a quantity according to a predefined desired plurality of said second type of cured polymeric articles, said performance additives including at least one performance additive selected from a group consisting of a heat stabilizer, an acid absorber, a crosslinking inhibitor, a pigment, a flame retardant, a solvent repellant, a crosslinking enhancer, a crosslinking activator, a filler, a plasticizer, an antidegradant, and a bonding agent;
(e) configuring a control program with a first set of control settings specific for making said first type of polymeric articles with said first type of third batch admixture;
(f) flow admixing said first, second, and said first type of said third batch admixtures for said first type of said polymeric articles into a feed stream under control of said control program;
(g) forming said feed stream to provide shaped compounded polymer for a polymeric article of said first type;
(h) curing said shaped compounded polymer into said polymeric article of said first type;
(i) repeating said flow admixing, forming, and curing for said first type of said polymeric articles until said predefined desired plurality of said first type of cured polymeric articles have been made;
(j) configuring said control program with a second set of control settings specific for making said second type of polymeric articles with said second type of third batch admixture;
(k) flow admixing said first, second, and said second type of said third batch admixtures for said second type of said polymeric articles into a feed stream under control of said control program;
(I) forming said feed stream to provide shaped compounded polymer for a polymeric article of said second type;
(m) curing said shaped compounded polymer into said polymeric article of said second type; and
(n) repeating said flow admixing, forming, and curing for said second type of said polymeric articles until said predefined desired plurality of said second type of cured polymeric articles have been made.

39. A method according to Claim 38 wherein said carrier for said first and second types of said third admixtures is said base polymer.

40. A composition for admixing with a first batch admixture of base polymer and a first curing component of a plural component curing combination and with a second batch admixture of said base polymer and a second curing component of said curing combination, said composition and said first batch admixture and said second batch admixture admixing to provide a feed stream of compounded polymer, comprising:
(a) a carrier quantity of said base polymer; and
(b) a plurality of performance additives independently selected from the group consisting of a heat stabilizer, an acid absorber, a crosslinking inhibitor, a pigment, a flame retardant, a crosslinking enhancer, a crosslinking activator, a filler, a plasticizer, an antidegradant, and a bonding agent; wherein said carrier quantity provides less than about 10 percent of said base polymer in said compounded polymer of said feed stream, and wherein said base polymer is selected from the group consisting of liquid silicone, liquid fluoroelastomer, liquid nitrile rubber, liquid ethylene-propylene-diene polymer, liquid acrylic polymer, liquid hydrogenated nitrile butyl rubber, and combinations thereof.
